# EUROPEAN PATENT SPECIFICATION

(11) **EP 2 658 393 B1**
(45) Date of publication and mention of the grant of the patent: **18.02.2015**
(21) Application number: 11808606.5
(22) Date of filing: 07.12.2011
(51) Int. Cl.: A23L 1/22, A23G 9/32

(54) **FOOD PRODUCTS CONTAINING AROMA COMPOUNDS**
LEBENSMITTELPRODUKTE MIT AROMAVERBINDUNGEN
PRODUITS ALIMENTAIRES CONTENANT DES COMPOSÉS D'ARÔME

(30) Priority: 28.12.2010 EP 10197186
(43) Date of publication of application: 06.11.2013
(73) Proprietor: Unilever PLC, London, Greater London EC4Y 0DY (GB); Unilever N.V., 3013 AL Rotterdam (NL)
(72) Inventor: DIJKSTERHUIS, Garmt, Bernard, NL-3133 AT Vlaardingen (NL); LE BERRE, Elodie, Marie, NL-3133 AT Vlaardingen (NL)
(74) Representative: Warner, Guy Jonathan
(86) International application number: PCT/EP2011/072016
(87) International publication number: WO 2012/089461

(56) References cited:
- EP-A1- 2 071 963
- WO-A1-2009/108057
- WO-A2-2010/098659
- "Multisensory processing in flavour perception. Satellite symposium of the 9th International Multisensory Research Forum (Hamburg, Germany)", INTERNATIONAL MULTISENSORY RESEARCH FORUM 9TH ANNUAL MEETING, JULY 16 19, 2008, HAMBURG, GERMANY - MEETING PROGRAM, , 15 July 2008 (2008-07-15), pages 1-39,134, XP002592506, Retrieved from the Internet: URL:http://imrf.mcmaster.ca/IMRF/2008/pdf/ FullProgramIMRF08.pdf [retrieved on 2010-07-19]
- MOSCA A C ET AL: "Enhancement of sweetness intensity in gels by inhomogeneous distribution of sucrose.", FOOD QUALITY AND PREFERENCE, vol. 21, no. 7, 20 April 2010 (2010-04-20) , pages 837-842, XP002638810,

## Description

The present invention relates to food products containing two sections, wherein the two sections are visually the same, and wherein the two sections contain the same aroma compounds at different concentrations. The invention further relates to a method for consumption of the said food product, and the invention relates to a method for production of said food products.

### BACKGROUND OF THE INVENTION

Food product manufacturers often wish to decrease the amount of some of the ingredients of their food products, without compromising on the taste and liking of the products. As an example, reduction of the salt (kitchen salt, sodium chloride) level of food products would be advantageous for the health of the consumer, as high sodium intake may increase blood pressure. Also sugar reduction would be advantageous, because sugar contributes to the caloric value of a food product, and possibly to obesity of the consumer. Food products containing different sections with different concentrations of tastant are known. Several methods have been described to decrease the amount of these basic tastants, without compromising on the taste.

WO 2009/108057 A1 and WO 2009/108058 A1 disclose food products like bread which contain various thin layers or small regions wherein the layers or regions contain different levels of salt.

The proceedings of the 9th International Multisensory Research Forum (IMRF) in Hamburg, Germany, 16th to 19th July 2008 (authors G. Dijksterhuis and A. Woods) disclose that in spite of variations in food flavours over mouthfuls, consumers rarely acknowledge or even perceive such variations. The consumer experiences a contiguous food flavour despite obvious variation in sensory signals. Experiments were done with tastants only. A cookie model-food-stimulus was developed, containing two sections, and whose two halves sometimes differed in levels of sugar (0%, 33% and 67% sugar quantity differences) but were visually indistinguishable (to ensure the assumption of a homogeneous cookie). When starting to eat the cookie at the half with the highest sugar concentration, followed by eating (in a next bite) the half with a lower sugar concentration, sweetness ratings were indistinguishable. This effect can mask taste variation, as was shown with sugar in these experiments.

US 2007/0231430 A1 discloses candies containing different sections. These sections contain a different concentration of sour ingredients, leading to increasing sour intensity experience when eating the sections after each other. The eating of the candy is finished with an extinguisher section, in order to douse the sourness. When consuming this candy the consumer perceives a difference in taste between the various sections.

All food products contain aroma compounds, and these aroma compounds may be part of the food product as a natural element of food ingredients. For example fruit contains many aroma compounds, and when fruit is used as an ingredient of a food product, automatically also many aroma compounds are added to the food product. Additionally aroma compounds may be added as such, in order to improve the taste, aroma, and flavour profile of food products. Such added aroma compounds are often seen as artificial by the consumer, therefore consumers are in favour of food products wherein the level of added aroma compounds is low or even absent. Therefore the reduction of aroma compounds is desired, nevertheless while still keeping a good aroma, taste, and flavour profile of the product. Therefore total absence of added aroma compounds is often not possible.

Aroma compounds are volatile and are perceived through the nose, while tastants are perceived through the taste receptors which are contained by the taste buds on the upper surface of the tongue. Therefore the mechanism to influence the total taste, aroma, and flavour perception when the concentration of aroma compounds changes is very complex and different from the concentration of one or more tastant changes. Hence solutions proposed for the reduction of concentrations of, for example, salt and sugar are not directly applicable for the reduction of concentrations of aroma compounds.

### SUMMARY OF THE INVENTION

In spite of the many solutions that have been proposed, for example for reduction of sugar level in food products, there still is a need for food products which have a decreased content of added aroma compounds, without compromising on taste and flavour compared to food products which contain a normal concentration of the aroma compounds. Additionally by the reduction of the aroma compounds, less raw materials are required to produce a food product, and less energy needed to produce the aroma compounds, which is beneficial for the producer and the consumer. Less resources are required to produce a food product which is still liked and appreciated by the consumer.

Hence it is an object of the present invention to provide food products which have a decreased amount of aroma compounds, without compromising on the taste, flavour, feeling, mouth feel, sensory properties, and liking of these products as compared to similar products which do not have the decreased level of aroma compound.

We have now found that the concentration of aroma compounds can be decreased, while the consumer does not perceive the decrease of the concentration of aroma compounds. The consumer perceives the food product to be homogeneous with regard to taste and aroma and of the same quality as food products without the decreased concentration of aroma compounds. This is achieved by distributing the aroma compounds across at least two sections in different concentrations, wherein the at least two sections have the same visual appearance and the same other sensory properties (e.g. colour, structure, texture, or any other obviously and directly perceivable property), such that the at least two sections of the food product appear to be having the same composition and that the food product is a homogeneous composition. These at least two sections are consumed in different bites or different sips. Due to the homogeneous appearance of the food product, the consumer expects a constant tasting food product, and the consumer does not detect the decrease of the aroma compound. During the consumption of the food product, for example when having consumed the first section, and starting with the second section, the consumer still perceives the food product to be homogeneous, as the visual appearance and other sensory properties of the second section is the same as that of the first section.

The first section (which is taken in first when consuming the food product) contains a relatively normal or high concentration of the aroma compounds, while the second section (which is consumed directly and naturally after finishing the first section) contains a lower concentration of the aroma compounds. In general terms, if the sections would be eaten as single sections (not as part of a coherent food product comprising both sections), the consumer will probably like the first section more than the second section. That is because the first section contains a normal concentration (which means an amount that the consumer expects) of the aroma compounds. The first section of the food product is as the consumer likes it and expects it. The second section though contains a lower concentration of the aroma compounds, and the aroma profile of the second section is different than of the first section, and generally lower than the consumer would prefer.

Due to the homogeneous visual appearance and other homogeneous sensory properties, the consumer expects a homogeneously tasting product, and will indeed experience this when consuming the food product, in spite of the lower concentration of aroma compounds in the second section. The concentration difference of the aroma compounds between the two sections is not observed, and consequently the amount of aroma compounds can be decreased, without the consumer noticing this.

Accordingly in a first aspect the present invention provides a food product containing two sections, wherein the two sections are visually the same, wherein each of the two sections contains the same aroma compounds at the same relative proportion, wherein the ratio of concentrations of the aroma compounds in the first section and in the second section ranges from 10:1 to 1.5:1 based on the weight of the aroma compounds, wherein the two sections are consumable in discrete portions, and wherein the volume of each of the two sections is equal to or larger than a natural single bite or single sip.

In a second aspect the invention provides a method for consumption of the food product according to the first aspect of the invention, wherein the first section having the higher concentration of aroma compounds is consumed first, immediately followed by consumption of the second section having the lower concentration of aroma compounds, and optionally immediately followed by consumption of the third section having the higher concentration of aroma compounds.

And in a third aspect the present invention provides a method for the preparation of a food product comprising aroma compounds, wherein the prepared food product contains two sections, wherein the two sections are visually the same, wherein the two sections contain the same aroma compounds at the same relative proportion, at different concentrations in the two sections, comprising the steps of:
- preparing a first mixture of food ingredients comprising the aroma compounds to form a first section;
- preparing a second mixture of food ingredients comprising the aroma compounds at a lower concentration to form a second section,
- combining the two mixtures and preparing the food product,
and wherein the ratio of concentrations of the aroma compounds in the first section and second section is from 10:1 to 1.5 to 1, based on the weight of the aroma compounds, wherein the two sections are consumable in discrete portions, and wherein the volume of each of the two sections is equal to or larger than a natural single bite or single sip.

### DETAILED DESCRIPTION

Unless defined otherwise, all technical and scientific terms used herein have the same meaning as commonly understood by one of ordinary skill in the art.

All percentages, unless otherwise stated, refer to the percentage by weight. The term 'wt%' refers to the percentage by weight.

Tastant: refers to a compound that provides a basic taste which is perceived by the receptors that are contained on the taste buds on the upper surface of the tongue, and the basic tastes are sweet, sour, salty, bitter, and umami.

Aroma compound: refers to food ingredients that are volatile and that are perceived by the nose.

Flavour: refers to the combination of tastant(s) and aroma compound(s) that together provide the sensory perception of a food product.

### Food products

In a first aspect the present invention provides a food product containing two sections, wherein the two sections are visually the same, wherein each of the two sections contains the same aroma compounds at the same relative proportion, wherein the ratio of concentrations of the aroma compounds in the first section and in the second section ranges from 10:1 to 1.5:1 based on the weight of the aroma compounds, wherein the two sections are consumable in discrete portions, and wherein the volume of each of the two sections is equal to or larger than a natural single bite or single sip.

The food product according to the invention contains at least two sections, wherein the two sections are visually the same. The phrase 'visually the same' is understood to mean that the two sections have the same visual appearance, relating to colour, structure, texture, and preferably any other obviously and directly perceivable property, such that the two sections of the food product appear to be having the same composition for the observer of the food product. Homogeneous in the present context should be understood to mean that the two sections appear to form a food product without separate sections. Still a single section may be heterogeneous on small scale, meaning that a section may contain ingredients which are recognizable as such, and which lead to a section being heterogeneous. Examples of this are pieces of fruit in an ice cream, or nuts and seeds in bread. Still in that case the two sections of the food product according to the invention are similarly heterogeneous, such that it seems that the two sections have the same overall composition, and together form a homogeneous food product (on the scale of the food product).

The sections of the food product contain the same aroma compounds, at the same relative proportion. An aroma compound may consist of dozens of chemicals at a certain weight ratio that together constitute the aroma compounds. For example a strawberry aroma may consists of dozens of ketones, aldehydes, acids, and other organic chemicals. In the context of the present invention, 'the same aroma compounds' in two sections of the food products, means that the specific chemicals and their 'relative proportion' that together constitute the aroma compounds is the same in the two sections.

The total concentration of the aroma compounds is different though in the two sections: the concentration of the aroma compounds is lower in the second section than in the first section. This is understood to mean that the aroma compounds are distributed as homogeneous as possible in the sections of the food product (natural little variations can be neglected). The concentration of the aroma compounds in each section should be considered across the section as a whole. There may be tiny spots in the section which contain locally a higher or lower concentration of the aroma compounds, due to natural variations, or due to the composition of the section. For example the section may contain chunks of an ingredient, and inside these chunks the local concentration of the aroma compounds may be higher or lower than seen on the scale of the section as a whole.

The two sections are consumable in discrete portions, which is understood to mean that the portions are consumed in different bites or different sips, and wherein the discrete portions have a size which is a normal average single bite or single sip size for the specific food product. The volume of the at least two individual sections is equal to or larger than a natural single bite or single sip. For example the first section may be consumed in 1, 2, 3, 4, 5, 6, 7, 8, 9, or 10 natural bites or natural sips. This means that for various food products the two sections may have different natural sizes. If the food product is a bread or a nutritional bar, then the natural single bite size may be larger than when the food product is an ice cream. If the preferred food product is an ice cream, then the volume of the first section will be at least the size of one natural bite. The volume of the first section may also be the size of two or three or more natural bites.

Preferably the food product according to the invention is a food product wherein the second section has a volume maximally equal to the first section. In that case the consumer will consume the second section with a clear memory (not necessarily an explicit memory) of the first section, and will (possibly implicitly) remember the normal or good tasting first section. For example the volume of the second section may be the same as the volume of the first section, or it may be half the volume of the first section, or it may be a quarter of the first section, or any other volume smaller than the first section. The volume of the second section is equal to or larger than a natural single bite or single sip. For example the first section may be consumed in 1, 2, 3, 4, or 5 natural bites or natural sips.

Preferably, the first aspect of the invention provides a food product, wherein the food product is solid or semi-solid. A solid or semi-solid food product is understood to mean a product which has a solid or semi-solid appearance. This may include food products which partly contain liquid or soft ingredients or elements and partly contain solid ingredients. Examples of such products include but are not limited to bread, ice cream, chocolate, candy bars, and nutritional bars. Preferably the food product is designed such that the two sections are arranged in linear fashion, thus next to each other. In linear fashion may also be understood that the food product is curved. Alternatively the second section may be a core surrounded by the first section. Alternative layouts may be suitable as well. Anyway the food product is designed such that the first section is consumed completely before consumption of the second section commences.

Preferably the food product is a product wherein the two sections are in contact with each other, which is understood to mean that the two sections may be affixed to each other as a continuous product, for example in a nutritional bar wherein the two sections may form a homogeneous food product which seemingly does not contain discrete sections. This way the preferred food product according to the invention is considered to be a food product having a homogeneous composition, and does not appear to be a product having sections with a different concentration of the aroma compounds over the various sections.

The food product may be a beverage or other liquid product (like soup), in which case the food product is packed in packaging material in which the sections are divided over different compartments. When the liquid food product is consumed from the packaging material directly, then the design is such that the first section is consumed first, followed by consumption of the second section.

The concentration of the aroma compounds in the first section may be from 1.5 to 10 times as high as in the second section, based on the weight of the aroma compounds and the weight of the section. Natural variations in the concentration of aroma compounds in a product, which are undesired and unplanned in designing and manufacturing the product and which may be due to natural variations, or due to incomplete mixing, are considered to be outside the scope of this invention.

Preferably the food product according to the invention is a food product, wherein the ratio of concentrations of the aroma compounds in the first section and second section is from 9:1 to 1.5:1, preferably from 8:1 to 1.8:1; preferably from 8:1 to 2:1; preferably from 6:1 to 2:1; based on the weight of the aroma compounds and the weight of the section.

The present invention may be suitable for many kinds of food products. Preferred though are products like soup, bread, baked dough products, cookies, biscuits, baked pastry products, ice cream, water ice, nutritional bars, chocolate, and condiments. More preferred the food product is chosen from the group of soup, bread, baked dough products, baked pastry products, ice cream, water ice, and nutritional bars. Most preferred the food product comprises ice cream or water ice.

The total concentration of the aroma compounds may range from 0.01% by weight up to 5% by weight, preferably from 0.05% by weight to 4% by weight. The required concentration depends on the specific aroma compounds and the specific food product.

Preferably the aroma compounds comprise fruit aroma compounds, or chocolate aroma compounds, or vanilla aroma compounds, or dairy aroma compounds. Most preferred the aroma compounds comprise fruit aroma compounds. Preferred fruit aroma compounds are red fruit aroma compounds, such as strawberry aroma compounds, raspberry aroma compounds, cherry aroma compounds, and combinations of these.

A unit amount of a food product is a quantity of a food product which is usually consumed as a single serving. The unit amount or serving size of such food products depends on the specific product. A few non-limiting examples of typical serving sizes are:
milk, yoghurt: 200 mL
natural cheese: 43 gram
processed cheese: 57 gram
fruit juice: 177 mL
soft drink: 200 mL
bread: 1 slice, 35 gram
coffee: 125 mL
tea: 150 mL
cereal bar, candy bar: 50 gram
chocolate: 30 gram
ice cream: 100 mL
water ice: 100 mL
spread: 15 gram
soup: 250 mL
cocoa beverage: 200 mL

A unit amount of a food product in the context of the present invention may be packed and sold as a single portion. For example, ice cream may be packed as individual units, therewith making such an individual portion a unit amount in the context of the present invention. The actual weight or volume of such an individually packed product may be higher or lower than indicated above for a standard serving size. For example some ice creams sold as single portions in single packs have a volume of 150 mL or more.

The food product may be dried and contain less than 40% water by weight of the composition, preferably less than 25%, more preferably from 1 to 15%. Alternatively, the food may be substantially aqueous and contain at least 40% water by weight of the composition, preferably at least 50%, more preferably from 65 to 99.9%.

The food product preferably comprises nutrients including carbohydrate (including sugars and/or starches), protein, fat, vitamins, minerals, phytonutrients (including terpenes, phenolic compounds, organosulfides or a mixture thereof) or mixtures thereof. The food may be low calorie (e.g. have an energy content of less than 100 kCal per 100 g of the composition) or may have a high calorie content (e.g. have an energy content of more than 100 kCal per 100 g of the composition, preferably between 150 and 1,000 kCal). The food may also contain salt, other aroma compounds, colours, preservatives, antioxidants, non-nutritive sweetener or a mixture thereof.

### Preferred additional tastants

As indicated herein before, generally there is a desire to decrease the amount of sugar and salt in food products. On the contrary to sugar and salt, it is often desired to increase the concentration of some bitter compounds in food products, as many compounds that are considered to be beneficial for health happen to taste bitter. For example, polyphenolics from red wine or olive oil are antioxidants with potential health benefits, and also taste bitter. As another example, methylated xanthine derivatives (methylxanthines, which includes caffeine, paraxanthine, theophylline, theobromine and isocaffeine) are known to potentially affect the mood when ingested, and additionally have other beneficial effects like improved brain function, higher alertness, and appetite suppression. Also the methylxanthines taste bitter. There is a general desire in the food industry to enrich food products with bitter tasting compounds like methylxanthines and also other compounds, in order to achieve the beneficial effects of these compounds when consumed as ingredient of a food product.

A preferred aspect of the invention is a food product according to the first aspect of the invention, wherein the two sections additionally contain the same tastant at different concentrations in the two sections, wherein the tastant is a sweet tastant, or a sour tastant, or a salty tastant, or a bitter tastant, or an umami tastant, and wherein the ratio of concentrations of the additional tastant in the first section and second section is from 20:1 to 1.5:1 or from 1:1.5 to 1:20 based on the weight of the tastant.

Preferably, in case an increase of a tastant is desired (e.g. in case of healthy and bitter tasting compounds), the first section (which is taken in first when consuming the food product) contains a relatively low concentration of the tastant, while the second section (which is consumed directly after finishing the first section) contains a higher concentration of the tastant. In general terms, if the sections would be eaten as single sections (not as part of a coherent food product comprising both sections), the consumer will like the first section more than the second section. That is because the first section contains a normal concentration (which means an amount that the consumer expects) of the tastant, for example in case of a bitter component, a very low concentration of the bitter tasting compound. The first section of the food product is as the consumer likes it and expects it. The second section though contains a higher concentration of the tastant, and again in case of a bitter tasting compound, the bitterness of the second section is higher than of the first section, and generally higher than the consumer would prefer.

Due to the homogeneous visual appearance, the consumer expects a homogeneously tasting product, and will indeed experience this when consuming the food product. The concentration difference of the tastant between the two sections is not observed, and consequently the amount of salt can be decreased, without the consumer noticing this. This may have beneficial health effects for the consumer.

The food products according to the invention preferably additionally contain a sweet tastant, or a sour tastant, or a salty tastant, or a bitter tastant, or an umami tastant, or a combination of two or more of these tastants. If in a preferred embodiment the food production comprises a combination of tastants within the context of the invention, then the first tastant may be reduced in the second section as compared to the first section (e.g. sugar), and the bitter tasting compound is increased in the second section as compared to the first section (e.g. theobromine). It may also be the case that the food product comprises two additional tastants which both have a decreased concentration in the second section, as compared to the first section. Or alternatively the other way around: tastants which both have an increased concentration in the second section, as compared to the first section.

Especially sugar and salt are compounds for which there is a desire to decrease the concentration in the food product, without noticing by the consumer. Preferably the food product according to the invention additionally contains a sweet tastant or a salty tastant, or a combination of these. Preferably the sweet tastant is sugar (sucrose), preferably the salty tastant is kitchen salt (sodium chloride). For these preferred tastants the concentration of the tastant in the first section is higher than the concentration of the tastant in the second section. In that case the amount of sweet or salty tastant can be reduced as compared to a conventional food product.

In case a reduction of an additional tastant is desired (e.g. salt, sugar), the first section (which is taken in first when consuming the food product) contains a normal concentration of the tastant, while the second section (which is consumed directly after finishing the first section) contains a lower concentration of the tastant. In general terms, if the sections would be eaten as single sections (not as part of a coherent food product comprising both sections), the consumer will like the first section more than the second section. That is because the first section contains a normal concentration (which means an amount that the consumer expects) of the additional tastant, for example in case of sugar the sweetness of the first section is as the consumer likes it and expects it. The second section though contains a lower concentration of the tastant, and again in case of sugar, the sweetness of the second section is lower than of the first section, and generally lower than the consumer would prefer.

In case the additional tastant is a sweet tastant, the additional tastant preferably is table sugar (sucrose). A preferred food product according to the invention then is chosen from the group consisting of cookies, biscuits, baked dough products, baked pastry products, ice cream, nutritional bars, chocolate, and condiments. The concentration of sugar in these food products may range from 0.5% to 25% or higher. An example of a nutritional bar according to the invention would be a bar having a base of a biscuit-like composition, wherein the base consists of three sections, arranged in linear fashion. Thus a first section is affixed to a second section, which is affixed to a third section. The first and third sections of this preferred product contain a normal amount of sugar, while the second section contains a lower amount of sugar. The base seems to form a homogeneous base, the consumer does not observe a difference between the sections. The entire base may be covered by a kind of fruit layer, or jelly or fruit puree layer.

In case the additional tastant is a salty tastant, the additional tastant preferably is kitchen salt (sodium chloride). A preferred food product according to the invention then is chosen from the group consisting of soup, bread, baked dough products, baked pastry products, and nutritional bars. The concentration of kitchen salt in these products may range from 0.1 % to 5%.

Different additional tastants may have different preferred concentration ranges between the sections. For example if the tastant is a sweet tasting compound, then preferably the concentration in the second section is lower than in the first section. The ratio of the concentration of the additional sweet tastant between the first section and the second section is preferably from 20:1 to 1.5:1, preferably from 15:1 to 1.5:1, preferably from 10:1 to 1.5:1, preferably from 5:1 to 2:1, preferably from 4:1 to 2:1, based on the weight of the salty tastant. If the additional tastant is a salty tasting compound, then preferably the concentration in the second section is lower than in the first section. In case the additional tastant is a salty tasting compound, the ratio of the concentration of the additional salty tastant between the first section and the second section is preferably from preferably from 20:1 to 1.5:1, preferably from 15:1 to 1.5:1, preferably from 10:1 to 1.5:1, preferably from 5:1 to 2:1, preferably from 4:1 to 2:1, based on the weight of the salty tastant.

Another preferred food product according to the invention, is a food product, wherein the additional tastant is a bitter tasting compound. In that case the concentration of the bitter tastant in the first section is lower than the concentration of the tastant in the second section. Preferably the ratio of the concentrations of the bitter tastant in the first section and second section is from 1:1.5 to 1:20 based on the weight of the tastant, preferably from 1:5 to 1:15, preferably from 1:5 to 1:10; preferably from 1:2 to 1:5; preferably between from 1:2 to 1:4, based on the weight of the tastant.

Caffeine is a well-known constituent of food products like tea and coffee, and also of chocolate. Theobromine naturally occurs in cocoa (at a level of about 2% by weight), and is also present in chocolate, especially dark chocolate. Theophylline is naturally found in tea, in small quantities. Typical caffeine levels of some food products per unit amount serving range from about 8 mg in milk chocolate, up to about 150 mg in a cup of coffee. The theobromine amount per unit amount serving of chocolate ranges from about 60 to 180 mg. In general theobromine and caffeine levels vary widely in the various natural sources of these compounds.

### Optional further sections

Preferably the food product may contain more than two sections, and the concentration of the aroma compounds in possible third, fourth or other sections will be adapted to the concentration in the first and second sections. Hence preferably the food product according to the invention is a food product additionally containing a third section, wherein the three sections are visually the same, wherein the ratio of concentrations of the aroma compounds in the first section and third section is from 1.5:1 to 1:1.5 based on weight of the aroma compounds, wherein the three sections are consumable in discrete portions, and wherein the volume of each of the three sections is equal to or larger than a natural single bite or single sip. The concentration of the aroma compounds in the optional third section is preferably close to or nearly similar to the concentration of the aroma compounds in the first section, small natural variations (which are part of a common food manufacturing process) excluded. Preferably an optional third section contains a concentration of the aroma compounds which is up to 1.2 times higher or up to 1.2 times lower than the concentration of the aroma compounds in the first section, more preferably up to 1.1 times higher or up to 1.1 times lower. By consuming a preferred third section, the total flavour perception of the third section returns to normal, leading to the perception that the product as a whole contains a normal concentration of the aroma compounds, while in fact it has been reduced.

Also in this case 'visually the same' preferably relates to the three sections having the same visual appearance, relating to colour, structure, texture, and preferably any other obviously and directly perceivable property, such that the three sections of the food product appear to be having the same composition for the observer of the food product.

Preferably the optional third section is in contact with the second section and not with the first section. This may be understood to mean that the three sections of the food product are arranged in a linear fashion, wherein the second section is located between the first and third sections. 'In linear fashion' may also be understood that the food product is not straight, but may be curved. Alternatively the third section forms a core, surrounded by a shell of the second section, which again is covered by a shell of the first section. The three sections together appear to form a homogeneous food product, wherein no concentration difference of the aroma compounds seem to occur. Preferably the volume of the third section is about equal to the volume of the first section. Alternatively the volume of the third section is smaller than the volume of the first section, or it is larger than the volume of first section. The volume of the optional third section is equal to or larger than a natural single bite or single sip. For example the third section may be consumed in 1, 2, 3, 4, 5, 6, 7, 8, 9, or 10 natural bites or natural sips.

When consuming a preferred food product according to the invention having three discrete sections, usually the consumer starts with the first section having a normal concentration of the aroma compounds and consumes the first section. This is then followed by eating the second section in a next bite having a decreased concentration of the aroma compounds. Subsequently the third section is consumed, again having a normal concentration of the aroma compounds. Hence the consumer ends the consumption of the section of the preferred food product that has a normal concentration of the aroma compounds, which is the concentration of the aroma compounds that the consumer is used to and/or likes. Therefore the impression that the consumer gets from consumption of this product is that the product is homogeneous, and the section having a decreased concentration of the aroma compounds is not perceived differently from the other sections.

An optional third section contains a concentration of the aroma compounds preferably close to or similar to the first section, as defined before. Additional tastants may also be present in the optional third section. Hence preferably each of the three sections additionally contains the same tastant, wherein the tastant is a sweet tastant, or a sour tastant, or a salty tastant, or a bitter tastant, or an umami tastant, wherein the ratio of concentrations of the additional tastant in the first section and second section is from 20:1 to 1.5:1 or from 1:1.5 to 1:20 based on the weight of the tastant, and wherein the ratio of concentrations of the tastant in the first section and third section is from 1.5:1 to 1:1.5 based on the weight of the tastant. The concentration of the preferred tastant in the optional third section is preferably close to or nearly similar to the concentration of the tastant in the first section, small natural variations (which are part of a common food manufacturing process) excluded. Preferably an optional third section contains a concentration of the preferred tastant which is up to 1.2 times higher or up to 1.2 times lower than the concentration of the tastant in the first section, more preferably up to 1.1 times higher or up to 1.1 times lower. By consuming a preferred third section, the total flavour and taste perception of the third section returns to normal, leading to the perception that the product as a whole contains a normal concentration of the aroma compounds and the optional tastant, while in fact it has been reduced.

A preferred food product according to the invention additionally may contain a fourth section in addition to the three sections, wherein the four sections are visually the same, wherein the ratio of concentrations of the aroma compounds in the second section and fourth section is from 1.5:1 to 1:1.5 based on weight of the aroma compounds, wherein the four sections are consumable in discrete portions, and wherein the volume of each of the four sections is equal to or larger than a natural single bite or single sip. Preferably the ratio of concentrations of the aroma compounds in the second section and fourth section is from 1.2:1 to 1:1.2 based on weight of the aroma compounds, preferably from 1.1:1 to 1:1.1. The concentration of the aroma compounds in the fourth section is similar to the concentration of the aroma compounds in the second section, small natural variations (which are part of a common food manufacturing process) excluded. Preferably the optional fourth section is in contact with the third section and not with the first or second section. This may be understood to mean that the four sections of the food product are arranged in a linear fashion, wherein the second and third sections are located in between the first and fourth sections. 'In linear fashion' may also be understood that the food product is not straight but curved. Alternatively the fourth section forms a core, surrounded by a shell of the third section, which again is covered by a shell of the second section, which again is covered by a shell of the first section. The four sections together appear to form a homogeneous food product, wherein no concentration difference of the aroma compounds seem to occur. Preferably the volume of the fourth section is about equal to the volume of the second section. Alternatively the volume of the fourth section is smaller than the volume of the first section, or it is larger than the volume of first section. The volume of the optional fourth section is larger than a natural single bite or single sip. For example the fourth section may be consumed in 1, 2, 3, 4, or 5, natural bites or natural sips.

An optional fifth section is similar to the optional third section, mutatis mutandis. An optional sixth section is similar to the optional fourth section, mutatis mutandis. The food product also may contain more sections, as applicable. The same considerations as for the ratios of concentration of the aroma compounds in the sections can be applied *mutatis mutandis* to additional tastants. Also in this optional embodiment 'visually the same' preferably relates to the four or five or more sections having the same visual appearance, relating to colour, structure, texture, and preferably any other obviously and directly perceivable property, such that the three sections of the food product appear to be having the same composition for the observer of the food product.

### Instructions for consumption of the food product and method for consumption of the food product

The food product comprises aroma compounds, and the second section contains a lower concentration of the aroma compounds than the first section and an optional third section (and mutatis mutandis more sections having the corresponding concentrations might be included). The first aspect of the invention hence further provides a product comprising said food product according to the invention, and instructions for consumption of the food product, wherein the instructions define that the first section having the higher concentration of aroma compounds should be consumed first, immediately followed by consumption of the section having the lower concentration of aroma compounds, and optionally immediately followed by consumption of the third section having the higher concentration of aroma compounds. Optional further sections are preferably consumed subsequently. The instructions may be printed on the pack in which an individual item or multiple items of the food product according to the invention is packed. Alternatively the instructions may be implicit, in the sense that the product has been designed in such a way as to leaving the consumer no choice than eating the product section by section.

In a second aspect the invention provides a method for consumption of the food product according to the first aspect of the invention, wherein the first section having the higher concentration of aroma compounds is consumed first, immediately followed by consumption of the second section having the lower concentration of aroma compounds, and optionally immediately followed by consumption of the third section having the higher concentration of aroma compounds. Optional further sections are preferably consumed subsequently. The method for consumption of the food product may be followed by the consumer by adhering to the earlier described instructions. Alternatively the design of the food product may be such that the consumer automatically is directed to consuming the first section first, followed by the second section, and followed by an optional third section. For example, in case of an ice cream which is at the base affixed to a wooden stick, the first section is the top of the ice cream which is eaten firstly, and the second section is then eaten after finishing the first section. An optional third section is then eaten as the last section. Also the package design and way of opening the package may lead the consumer to eating the first section first, followed by the second section, followed by the second section and optional further sections.

In case the food product additionally comprises a tastant which is a sweet tasting compound, then the second section contains a lower concentration of that tastant than the first section and an optional third section (and mutatis mutandis more sections having the corresponding concentrations might be included). By the method for consumption of the said product according to the second aspect of the invention, the concentration of the sweet tasting compound can be reduced, without compromising on the quality of the food product. The consumer will not notice the difference in concentration of the sweet compound. Hence the present invention also provides a method for reduction of the concentration of a sweet tastant, by consuming said preferred food product. In spite of a relatively low concentration of the sweet tastant in the second section (and optional further sections), the food product is not considered to taste less sweet, according to the consumer who eats that food product.

In case the food product additionally comprises a tastant which is a salty tasting compound, then the second section contains a lower concentration of that tastant than the first section and an optional third section (and mutatis mutandis more sections having the corresponding concentrations might be included). By the method for consumption of the said product according to the second aspect of the invention, the concentration of the salty tasting compound can be reduced, without compromising on the quality of the food product. The consumer will not notice the difference in concentration of the salty compound. Hence the present invention also provides a method for reduction of the concentration of a salty tastant, by consuming said preferred food product. In spite of a relatively low concentration of the salty tastant in the second section (and optional further sections), the food product is not considered to taste less salty, according to the consumer who eats that food product.

In case the food product additionally comprises a tastant which is a bitter tasting compound, then the second section contains a higher concentration of that tastant than the first section and an optional third section (and mutatis mutandis more sections having the corresponding concentrations might be included). By the method for consumption of the said product according to the second aspect of the invention, the concentration of the bitter tasting compound can be reduced, without compromising on the quality of the food product. The consumer will not notice the difference in concentration of the bitter compound. Hence the present invention also provides a method for reduction of the concentration of a bitter tastant, by consuming said preferred food product. In spite of a relatively high concentration of the bitter tastant in the second section (and optional further sections), the food product is not considered to taste more bitter, according to the consumer who eats that food product.

### Production of the food products

In a third aspect the present invention provides a method for the production of a food product comprising aroma compounds, wherein the prepared food product contains two sections, wherein the two sections are visually the same, wherein the two sections contain the same aroma compounds at the same relative proportion, at different concentrations in the two sections, comprising the steps of:
- preparing a first mixture of food ingredients comprising the aroma compounds to form a first section;
- preparing a second mixture of food ingredients comprising the aroma compounds at a lower concentration to form a second section,
- combining the two mixtures and preparing the food product,
and wherein the ratio of concentrations of the aroma compounds in the first section and second section is from 10:1 to 1.5 to 1, based on the weight of the aroma compounds, wherein the two sections are consumable in discrete portions,
and wherein the volume of each of the two sections is equal to or larger than a natural single bite or single sip.

Preferably the method according to the third aspect of the invention for the production of a food product comprising aroma compounds, wherein the prepared food product contains a third section containing the same aroma compounds at the same relative proportion, comprises the additional step of preparing a third mixture of food ingredients comprising aroma compounds to form a third section, and combining the third section with the first section and the second section, and wherein the ratio of concentrations of the aroma compounds in the first section and third section is from 1.5:1 to 1:1.5 based on the weight of the aroma compounds, wherein the three sections are consumable in discrete portions, and wherein the volume of each of the three sections is equal to or larger than a natural single bite or single sip.

Preferred tastants may be added to the sections at the relative concentrations in the sections as indicated herein before in the context of the first aspect of the invention.

Preferred aspects disclosed in connection with the first and second aspects of the present invention, may also be applicable to the third aspect of the present invention, mutatis mutandis.

The method for production depends on the actual food product according to the invention. For example if the food product is an ice cream, then the preparation method involves a freezing step. Or another example if the food product is a biscuit, then the preparation method involves a baking step.

Preferred aspects disclosed in connection with the first, second, or third aspects of the present invention, may also be applicable to the other aspects of the present invention, mutatis mutandis. The various features and embodiments of the present invention, referred to in individual paragraphs above apply, as appropriate, to other paragraphs, mutatis mutandis. Consequently features specified in one paragraphs may be combined with features specified in other paragraphs, as appropriate. Although the invention has been described in connection with specific preferred embodiments, it should be understood that the invention as claimed should not be unduly limited to such specific embodiments.

### DESCRIPTION OF FIGURES

**Figure 1****:** Average time- strawberry intensity plot of 4 ice lollies from example 1; 4 curves indicates 4 ice lollies (1, 2, 3, 4, as in Table 1); each curve is average of 44 measurements;
   box A below schematically indicates the ice lolly with 3 compartments, consumed from left to right;
   box B below schematically indicates the distribution of the 8 pieces that were tasted.
**Figure 2****:** Time-strawberry intensity plot of 2 ice lollies from example 1; ice lollies 3 '0.35 H-L-H' and 4 '0.35 M-M-M' (as in Table 1); each curve is average of 44 measurements;
   box A below schematically indicates the ice lolly with 3 compartments, consumed from left to right;
   box B below schematically indicates the distribution of the 8 pieces that were tasted.
**Figure 3****:** Time- strawberry intensity plot of 2 ice lollies from example 1; ice lollies 1 '0.45 H-L-H' and 2 '0.45 M-M-M' (as in Table 1); each curve is average of 44 measurements;
   box A below schematically indicates the ice lolly with 3 compartments, consumed from left to right;
   box B below schematically indicates the distribution of the 8 pieces that were tasted.
**Figure 4****:** Time- strawberry intensity plot of 2 ice lollies from example 1; ice lollies 1 '0.45 H-L-H' and 3 '0.35 H-L-H' (as in Table 1); each curve is average of 44 measurements;
   box A below schematically indicates the ice lolly with 3 compartments, consumed from left to right;
   box B below schematically indicates the distribution of the 8 pieces that were tasted.
**Figure 5****:** Time- strawberry intensity plot of 2 ice lollies from example 1; ice lollies 2 '0.45 M-M-M' and 4 '0.35 M-M-M' (as in Table 1); each curve is average of 44 measurements;
   box A below schematically indicates the ice lolly with 3 compartments, consumed from left to right;
   box B below schematically indicates the distribution of the 8 pieces that were tasted.

### EXAMPLES

The following non-limiting example illustrates the present invention.

### Example 1: Four water ices containing aroma compounds in time-intensity test

Four water ices were prepared, each water ice containing three sections. The sections had various aroma compounds concentrations, as indicated in the following table. The volumes and sizes of the sections of the ice creams in this example were the same as in example 1, so each ice cream had a slightly tapered cylindrical shape, with a length of about 10 cm, and a diameter of about 2 cm (total volume about 33 milliliter). The water ices had a wooden stick on one end, in the longitudinal direction of the ice cream, such that the water ices could be eaten as a lolly. Each section had a cylindrical shape and a volume of about 11 milliliter, with a diameter of about 2 cm, and a length of about 3.5 cm. These three sections were connected to each other, and had the same visual appearance, such that the ice cream appeared to have a homogeneous composition.

The ingredients of the premixes to produce the ice lollies was the following:
sucrose: 23 wt%
locust bean gum: 0.06 wt%
citric acid: 0.3 wt%
beetroot red colourant: 0.15 wt%
total strawberry aroma compounds: 0.35 wt% or 0.45 wt%
water: to 100 wt% (76.04 wt% or 76.14 wt%)

The only differences between the three sections in a single water ice was the concentration of aroma compounds, the concentration of other ingredients was kept constant.

The layout of the four water ice lollies and the concentration of aroma compounds in the various compartments have been schematically indicated in the following table.

**Table 1: Schematic layout and aroma compound concentrations in the individual sections of the four ice lollies.**

| | *ice lolly 1* '0.45 *H-L-H'* average 0.45% aroma compounds | *ice lolly 2 '0.45 M-M-M' (comparative)* average 0.45% aroma compounds | *ice lolly 3 '0.35 H-L-H'* average 0.35% aroma compounds | *ice lolly 4 '0.35 M-M-M' (comparative)* average 0.35% aroma compounds |
|---|---|---|---|---|
| *section 1 (outer)* concentration strawberry aroma compounds [wt%] | 0.6 | 0.45 | 0.47 | 0.35 |
| *section 2 (middle)* concentration strawberry aroma compounds [wt%] | 0.15 | 0.15 | 0.12 | 0.35 |
| *section 3 (outer)* concentration strawberry aroma compounds [wt%] | 0.6 | 0.15 | 0.47 | 0.35 |
| | 'high' aroma compounds, heterogeneous | 'high' aroma compounds, homogeneous | 'low' aroma compounds, heterogeneous | 'low' aroma compounds, homogeneous |

The standard procedure to prepare the ice lollies was the following. The desired quantities of ingredients were manually weighed and dosed into a mixing vessel where these ingredients were blended together to form a premix. The mix was pasteurised, and then rapidly cooled (within 2 minutes) to 6-9°C and transferred to a storage tank where its temperature was maintained at lower than 5°C. The ice lollies were made using moulds, which are slightly tapered cylindrical shapes of approximately 40 milliliter volume. The mould was partially submerged in a brine bath at -27°C. The premix was normally added, and after approximately 5 minutes, sticks were inserted. After a further 15-20 minutes, the mould was removed from the brine solution and partially submerged in warm water. The products melted around the edges and were then released from the mould. They were then placed in waxed bags and put in storage at -20°C until consumed.

The ice lollies according to the invention having three sections were made by filling the mould with smaller quantities, in separate sections having different aroma compound concentrations, allowing 5 minutes to partially freeze the section before the next one was added. Sticks were inserted in the final section.

The homogeneous ice lollies were also made in three sections (each section having the same composition), so that any visual cue, due to sections would be present in these samples also.

### Sensory Methodology

Products were assessed by 17 trained sensory panellists using Time Intensity Methodology (TI). Aim was to measure the overall perception and the lingering perception of aroma compounds that consumers would get while eating the different variants of ice lollies. In this method, panellists were asked to eat the ice lollies and to evaluate the aroma perception of the ice lollies throughout its consumption.

Products were served at -18°C and evaluated under white light. Presentation sequence was randomised and balanced for order and carry-over effects. Before evaluating the product, the panellist made 8 marks on the lolly with a knife to represent 8 equally sized pieces of water ice. The total time measurement for the whole product was 8 minutes and 15 seconds. The strawberry flavour of the 1^{st} to 7^{th} pieces were evaluated at 45 seconds intervals, while the strawberry flavour of the 8^{th} piece was evaluated for 3 minutes. When evaluating the product pieces, the panellists chewed then sucked then chewed then moved the piece of product around their mouth until it was completely melted. Palate cleansers available were water, biscuits, and 5 minute intervals between the products.

While chewing the panellists moved a cursor on a computer screen using the mouse, in order to define the sample's strawberry aroma intensity. This cursor determines the intensity of the strawberry aroma as function of time. Each sample was assessed three times by the panellists. Hence the number of replicate assessment for each ice lolly was 43 to 44.

The following data were collected for each ice lolly sample:
- average time intensity plot of strawberry aroma, for the entire product;
- intensity plot of strawberry aroma of ice lolly, for all 8 pieces of each ice lolly, data presented as average of 44 assessments;

The tasting sessions indicate the following.

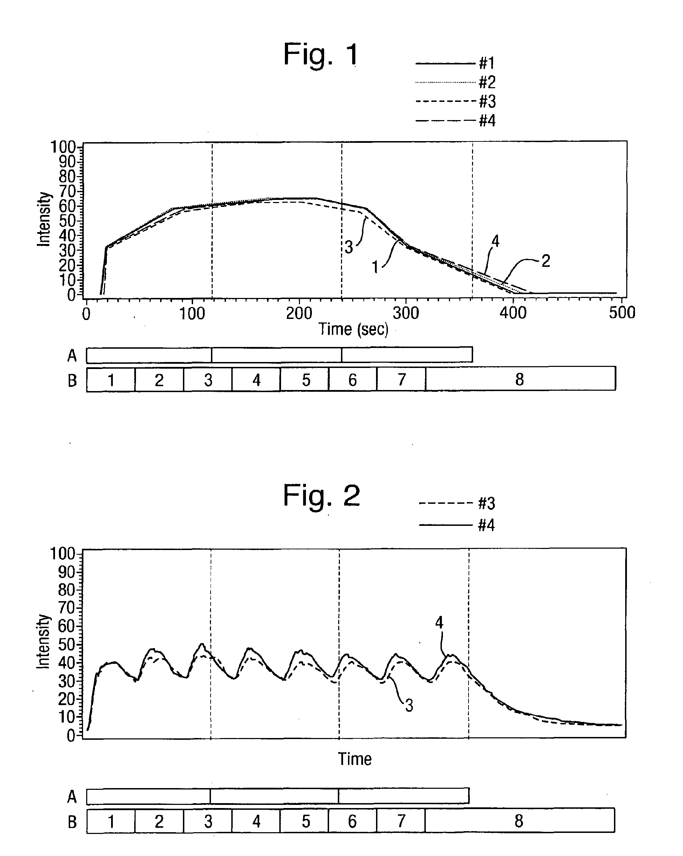

**Figure 1** indicates that the average time- strawberry aroma intensity curves are very close to each other. The intensity increases when eating pieces 1 and 2, which are the outer compartments of the ice lolly. Consumption of pieces 3 to 6 leads to a more or less constant average strawberry intensity, and decrease of the intensity after eating the 8^{th} piece. Interestingly not much difference can be observed between the H-L-H and M-M-M samples, meaning that in spite of a low concentration of aroma compound in the middle layer, the total strawberry intensity does not decrease when consuming the middle compartment of the ice lolly. This effect is also observed when the time-intensity plots of the individual ice lollies are observed (Figure 2 to Figure 5).

**Figure 2** shows the time- strawberry intensity curve of ice lollies 3 '0.35 H-L-H' and 4 '0.35 M-M-M'. This curve shows that when eating a first piece the strawberry intensity increases, and while chewing it slowly decreases. Consumption of each piece shows a hill profile, first increase of intensity, and after reaching a maximum, decrease of the intensity. Remarkably ice lolly 3 '0.35 H-L-H' also shows a profile, where upon consumption of the middle compartment of the ice lolly, the strawberry intensity shows the same profile at the same level as the outer compartments. This is in spite of a much lower aroma concentration in the middle compartment than in the outer compartments.

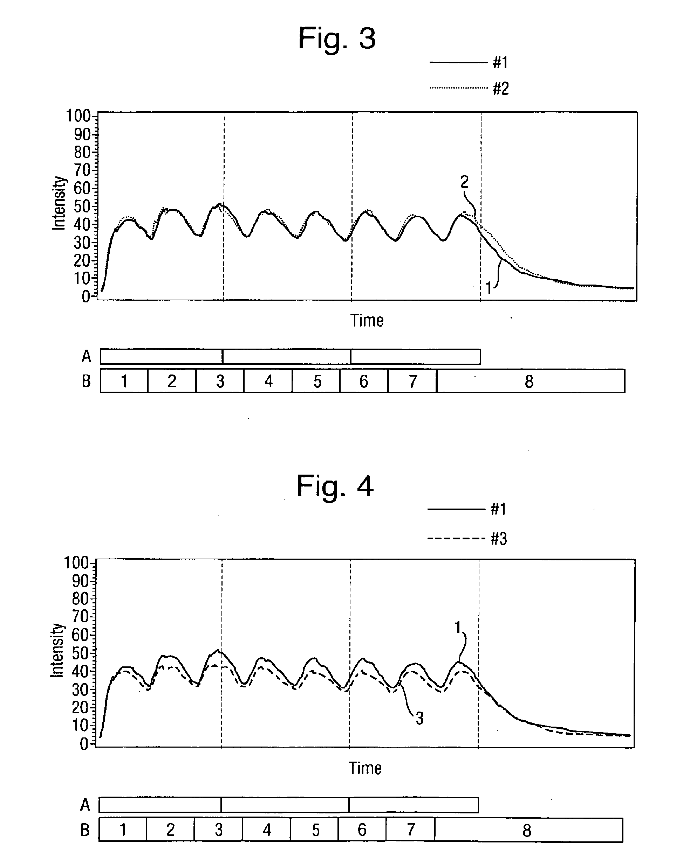

**Figure 3** shows a similar profile for ice lollies 1 '0.45 H-L-H' and 2 '0.45 M-M-M'. The two curves match each other, the intensities for both ice lollies is the same. Upon consumption of the middle compartment of ice lolly 1 '0.45 H-L-H', the strawberry intensity shows the same profile at the same level as the outer compartments.

**Figure 4** shows ice lollies 1 '0.45 H-L-H' and 3 '0.35 H-L-H', and the curves shows that the strawberry intensity of the ice lolly 1 with average 0.45% aroma is higher than ice lolly 3 with average 0.35% aroma. This difference is not unexpected.

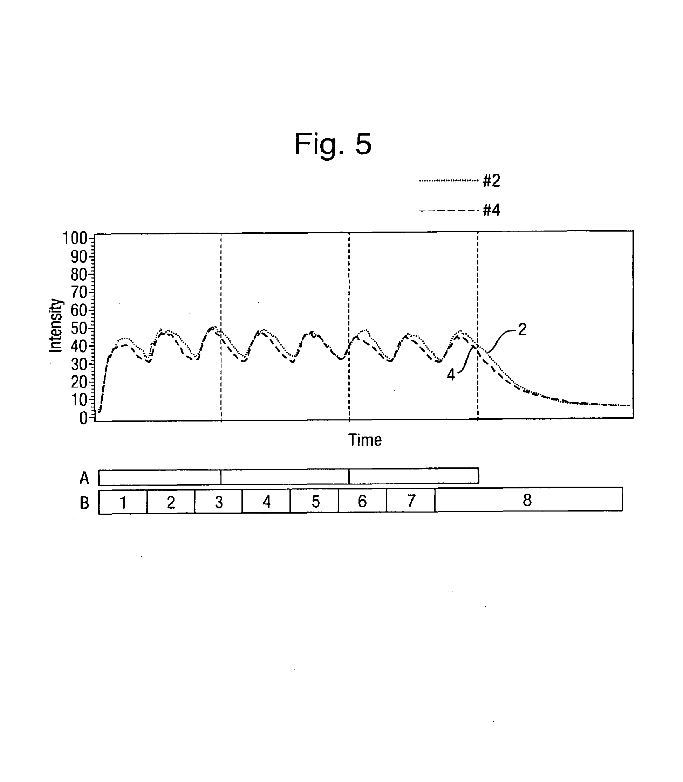

**Figure 5** shows similar strawberry intensities for ice lollies 2 '0.45 M-M-M' and 4 '0.35 M-M-M'. Also here the 0.45% ice lolly has a higher strawberry intensity than the 0.35% ice lolly.

These results show that when the consumer is used to a certain taste, flavour and aroma profile of a first piece of a food product, and consumes a second part of that food product that has the same appearance as the first product, but a lower aroma concentration, the lower aroma concentration is not observed and the appreciation of the product is the same as for the pieces with the higher concentration of aroma compound. Therewith products can be made which need a lower amount of added aroma compounds.

## Claims

1. A food product containing two sections,
wherein the two sections are visually the same,
wherein each of the two sections contains the same aroma compounds at the same relative proportion,
wherein the ratio of concentrations of the aroma compounds in the first section and in the second section ranges from 10:1 to 1.5:1 based on the weight of the aroma compounds, wherein the two sections are consumable in discrete portions,
and wherein the volume of each of the two sections is equal to or larger than a natural single bite or single sip.

2. A food product according to claim 1, wherein the two sections have the same visual appearance, relating to colour, structure, texture, and preferably any other obviously and directly perceivable property,
such that the two sections of the food product appear to be having the same composition for the observer of the food product.

3. A food product according to claim 1 or 2, wherein the second section has a volume maximally equal to the first section.

4. A food product according to any of claims 1 to3, wherein the food product is solid or semi-solid.

5. A food product according to any of claims 1 to 4, wherein the two sections are in contact with each other.

6. A food product according to any of claims 1 to 5, wherein the ratio of concentrations of the aroma compounds in the first section and in the second section ranges from 8:1 to 2:1, based on the weight of the aroma compounds.

7. A food product according to any of claims 1 to 6, wherein the food product is chosen from the group consisting of soup, bread, baked dough products, cookies, biscuits, baked pastry products, ice cream, water ice, nutritional bars, chocolate, and condiments.

8. A food product according to any of claims 1 to 7, wherein the aroma compound comprises fruit aroma compounds.

9. A food product according to any of claims 1 to 8, wherein the two sections additionally contain the same tastant at different concentrations in the two sections,
wherein the tastant is a sweet tastant, or a sour tastant, or a salty tastant, or a bitter tastant, or an umami tastant, and
wherein the ratio of concentrations of the additional tastant in the first section and second section is from 20:1 to 1.5:1 or from 1:1.5 to 1:20 based on the weight of the tastant.

10. A food product according to any of claims 1 to 9, additionally containing a third section, wherein the three sections are visually the same,
wherein each of the three sections contains the same aroma compounds at the same relative proportion,
wherein the ratio of concentrations of the aroma compounds in the first section and third section is from 1.5:1 to 1:1.5 based on weight of the aroma compounds,
wherein the three sections are consumable in discrete portions,
and wherein the volume of each of the three sections is equal to or larger than a natural single bite or single sip.

11. A food product according to claim 10, wherein the third section is in contact with the second section and not with the first section.

12. A food product according to claim 10 or 11, wherein each of the three sections additionally contains the same tastant,
wherein the tastant is a sweet tastant, or a sour tastant, or a salty tastant, or a bitter tastant, or an umami tastant,
wherein the ratio of concentrations of the additional tastant in the first section and second section is from 20:1 to 1.5:1 or from 1:1.5 to 1:20 based on the weight of the tastant, and wherein the ratio of concentrations of the tastant in the first section and third section is from 1.5:1 to 1:1.5 based on the weight of the tastant.

13. A product comprising a food product according to any of claims 1 to 12,
and instructions for consumption of the food product,
wherein the instructions define that the first section having the higher concentration of aroma compounds should be consumed first,
immediately followed by consumption of the section having the lower concentration of aroma compounds,
and optionally immediately followed by consumption of the third section having the higher concentration of aroma compounds.

14. A method for consumption of the food product according to any of claims 1 to 12, wherein the first section having the higher concentration of aroma compounds is consumed first,
immediately followed by consumption of the second section having the lower concentration of aroma compounds,
and optionally immediately followed by consumption of the third section having the higher concentration of aroma compounds.

15. A method for the preparation of a food product comprising aroma compounds, wherein the prepared food product contains two sections,
wherein the two sections are visually the same,
wherein the two sections contain the same aroma compounds at the same relative proportion, at different concentrations in the two sections,
comprising the steps of:
- preparing a first mixture of food ingredients comprising the aroma compounds to form a first section;
- preparing a second mixture of food ingredients comprising the aroma compounds at a lower concentration to form a second section,
- combining the two mixtures and preparing the food product,
and wherein the ratio of concentrations of the aroma compounds in the first section and second section is from 10:1 to 1.5 to 1, based on the weight of the aroma compounds, wherein the two sections are consumable in discrete portions,
and wherein the volume of each of the two sections is equal to or larger than a natural single bite or single sip.

## Patentansprüche

1. Lebensmittelprodukt,
das zwei Bereiche enthält,
wobei die beiden Bereiche visuell gleich sind,
wobei jeder der beiden Bereiche die gleichen Aromaverbindungen im gleichen relativen Anteil enthält,
wobei das Verhältnis der Konzentrationen der Aromaverbindungen im ersten Abschnitt und im zweiten Abschnitt im Bereich von 10:1 bis 1,5:1 liegt, und zwar auf das Gewicht der Aromaverbindungen bezogen,
wobei die beiden Bereiche in einzelnen Portionen verzehrt werden können,
und wobei das Volumen jedes der beiden Bereiche gleich oder größer als ein natürlicher einzelner Bissen oder einzelner Schluck ist.

2. Lebensmittelprodukt nach Anspruch 1,
wobei die beiden Bereichen das gleiche visuelle Aussehen haben, was Farbe, Struktur, Textur und vorzugsweise irgendeine andere offensichtlich und direkt feststellbare Eigenschaft betrifft,
so dass die beiden Bereiche des Lebensmittelproduktes für den Betrachter des Lebensmittelproduktes anscheinend die gleiche Zusammensetzung haben.

3. Lebensmittelprodukt nach Anspruch 1 oder 2,
wobei der zweite Bereich ein Volumen hat, das dem des ersten Bereichs höchstens gleich ist.

4. Lebensmittelprodukt nach einem der Ansprüche 1 bis 3,
wobei das Lebensmittelprodukt fest oder halbfest ist.

5. Lebensmittelprodukt nach einem der Ansprüche 1 bis 4,
wobei die beiden Bereiche im Kontakt miteinander stehen.

6. Lebensmittelprodukt nach einem der Ansprüche 1 bis 5,
wobei das Verhältnis der Konzentrationen der Aromaverbindungen im ersten Bereich und im zweiten Bereich von 8:1 bis 2:1 reicht, und zwar auf das Gewicht der Aromaverbindungen bezogen.

7. Lebensmittelprodukt nach einem der Ansprüche 1 bis 6,
wobei das Lebensmittelprodukt aus der Gruppe ausgewählt ist, die aus Suppe, Brot, gebackenen Teigprodukten, Plätzchen, Keksen, gebackenen Tortenprodukten, Eiscreme, Wassereis, Nahrungsriegeln, Schokolade und Würzen besteht.

8. Lebensmittelprodukt nach einem der Ansprüche 1 bis 7,
wobei die Aromaverbindung Fruchtaromaverbindungen aufweist.

9. Lebensmittelprodukt nach einem der Ansprüche 1 bis 8,
wobei die beiden Bereiche ferner den gleichen Geschmackssimulator in unterschiedlichen Konzentrationen in den beiden Bereichen enthalten,
wobei der Geschmackssimulator ein süßer Geschmackssimulator oder ein saurer Geschmackssimulator oder ein salziger Geschmackssimulator oder ein bitterer Geschmackssimulator oder ein Umami-Geschmackssimulator ist, und
wobei das Verhältnis der Konzentrationen des zusätzlichen Geschmackssimulators im ersten Bereich und im zweiten Bereich 20:1 bis 1,5:1 oder 1:1,5 bis 1:20 beträgt, und zwar auf das Gewicht des Geschmackssimulators bezogen.

10. Lebensmittelprodukt nach einem der Ansprüche 1 bis 9,
das ferner einen dritten Bereich enthält, wobei die drei Bereiche visuell gleich sind,
wobei jeder der drei Bereiche die gleichen Aromaverbindungen im gleichen relativen Anteil enthält,
wobei das Verhältnis der Konzentrationen der Aromaverbindungen im ersten Bereich und im dritten Bereich 1,5:1 bis 1:1,5 beträgt, und zwar auf das Gewicht der Aromaverbindungen bezogen,
wobei die drei Bereiche in einzelnen Portionen verzehrt werden können,
und wobei das Volumen jedes der drei Bereiche gleich oder größer als ein natürlicher einzelner Bissen oder einzelner Schluck ist.

11. Lebensmittelprodukt nach Anspruch 10,
wobei der dritte Bereich mit zweiten Bereich und nicht mit dem ersten Bereich in Kontakt steht.

12. Lebensmittelprodukt nach Anspruch 10 oder 11,
wobei jeder der drei Bereiche ferner den gleichen Geschmackssimulator enthält, wobei der Geschmackssimulator ein süßer Geschmackssimulator oder ein saurer Geschmackssimulator oder ein salziger Geschmackssimulator oder ein bitterer Geschmackssimulator oder ein Umami-Geschmackssimulator ist,
wobei das Verhältnis der Konzentrationen des zusätzlichen Geschmackssimulators im ersten Bereich und im zweiten Bereich 20:1 bis 1,5:1 oder 1:1,5 bis 1:20 beträgt, und zwar auf das Gewicht des Geschmackssimulators bezogen, und wobei das Verhältnis der Konzentrationen des Geschmackssimulators im ersten Bereich und im dritten Bereich 1,5:1 bis 1:1,5 beträgt, und zwar auf das Gewicht des Geschmackssimulators bezogen.

13. Produkt, das ein Lebensmittelprodukt nach einem der Ansprüche 1 bis 12 und Verzehrvorschriften für das Lebensmittelprodukt aufweist,
wobei die Vorschriften bestimmen, dass der erste Bereich mit der höheren Konzentration an Aromaverbindungen zuerst verzehrt werden sollte, unmittelbar gefolgt vom Verzehr des zweiten Bereichs mit einer geringeren Konzentration an Aromaverbindungen,
und gegebenenfalls unmittelbar gefolgt vom Verzehr des dritten Bereichs mit einer höheren Konzentration an Aromaverbindungen.

14. Verfahren zum Verzehren eines Lebensmittelproduktes nach einem der Ansprüche 1 bis 12,
wobei der erste Bereich mit der höheren Konzentration an Aromaverbindungen zuerst verzehrt wird,
unmittelbar gefolgt vom Verzehr des zweiten Bereichs mit der geringeren Konzentration an Aromaverbindungen,
und gegebenenfalls unmittelbar gefolgt vom Verzehr des dritten Bereichs mit der höheren Konzentration an Aromaverbindungen.

15. Verfahren zum Herstellen eines Lebensmittelproduktes, das Aromaverbindungen aufweist,
wobei das hergestellte Lebensmittelprodukt zwei Bereiche enthält,
wobei die beiden Bereiche visuell gleich sind,
wobei die beiden Bereiche die gleichen Aromaverbindungen im gleichen relativen Anteil in unterschiedlichen Konzentrationen in den beiden Bereichen enthalten, das die folgenden Schritte aufweist:
- Herstellen eines ersten Gemischs von Lebensmittelbestandteilen, das Aromaverbindungen aufweist, um einen ersten Bereich zu erzeugen,
- Herstellen eines zweiten Gemischs von Lebensmittelbestandteilen, das Aromaverbindungen in einer geringeren Konzentration aufweist, um einen zweiten Bereich zu erzeugen,
- Kombinieren der beiden Gemische und Herstellen des Lebensmittelproduktes, und wobei das Verhältnis der Konzentrationen der Aromaverbindungen im ersten Bereich und im zweiten Bereich 10:1 bis 1,5:1 beträgt, und zwar auf das Gewicht der Aromaverbindungen bezogen,
wobei die beiden Bereiche in einzelnen Portionen verzehrt werden können,
und wobei das Volumen jedes der beiden Bereiche gleich oder größer als ein natürlicher einzelner Bissen oder einzelner Schluck ist.

## Revendications

1. Produit alimentaire contenant deux sections,
où les deux sections sont visuellement les mêmes,
où chacune des deux sections contient les mêmes composés d'arôme dans les mêmes proportions relatives,
où le rapport de concentrations des composés d'arôme dans la première section et dans la seconde section va de 10:1 à 1,5:1 sur la base du poids des composés d'arôme,
où les deux sections sont consommables en portions discrètes,
et où le volume de chacune des deux sections est égal ou supérieur à une seule bouchée ou gorgée naturelle.

2. Produit alimentaire selon la revendication 1, où les deux sections ont le même aspect visuel, concernant la couleur, la structure, la texture et de préférence toute autre propriété perceptible de manière manifeste et directe,
de sorte que les deux sections du produit alimentaire semblent avoir la même composition pour l'observateur du produit alimentaire.

3. Produit alimentaire selon la revendication 1 ou 2, où la seconde section a un volume égal au maximum à la première section.

4. Produit alimentaire selon l'une quelconque des revendications 1 à 3, où le produit alimentaire est solide ou semi-solide.

5. Produit alimentaire selon l'une quelconque des revendications 1 à 4, où les deux sections sont en contact l'une avec l'autre.

6. Produit alimentaire selon l'une quelconque des revendications 1 à 5, où le rapport de concentrations des composés d'arôme dans la première section et dans la seconde section va de 8:1 à 2:1, sur la base du poids des composés d'arôme.

7. Produit alimentaire selon l'une quelconque des revendications 1 à 6, où le produit alimentaire est choisi dans le groupe consistant en la soupe, le pain, les produits de type pâte cuits, les cookies, les biscuits, les produits de pâtisserie cuits, la crème glacée, les sorbets, les barres nutritionnelles, le chocolat et les condiments.

8. Produit alimentaire selon l'une quelconque des revendications 1 à 7, où le composé d'arôme comprend des composés d'arôme de fruits.

9. Produit alimentaire selon l'une quelconque des revendications 1 à 8, où les deux sections contiennent en outre le même agent de sapidité à des concentrations différentes dans les deux sections,
où l'agent de sapidité est un agent de sapidité sucré, ou un agent de sapidité acide, ou un agent de sapidité salé, ou un agent de sapidité amer, ou un agent de sapidité umami, et
où le rapport de concentrations de l'agent de sapidité supplémentaire dans la première section et la seconde section est de 20:1 à 1,5:1 ou de 1:1,5 à 1:20 sur la base du poids de l'agent de sapidité.

10. Produit alimentaire selon l'une quelconque des revendications 1 à 9, contenant en outre une troisième section,
où les trois sections sont visuellement les mêmes,
où chacune des trois sections contient les mêmes composés d'arôme dans les mêmes proportions relatives,
où le rapport de concentrations des composés d'arôme dans la première section et la troisième section est de 1,5:1 à 1:1,5 sur la base du poids des composés d'arôme,
où les trois sections sont consommables en portions discrètes,
et où le volume de chacune des trois sections est égal ou supérieur à une seule bouchée ou gorgée naturelle.

11. Produit alimentaire selon la revendication 10, où la troisième section est en contact avec la seconde section et pas avec la première section.

12. Produit alimentaire selon la revendication 10 ou 11, où chacune des trois sections contient en outre le même agent de sapidité,
où l'agent de sapidité est un agent de sapidité sucré, ou un agent de sapidité acide ou un agent de sapidité salé ou un agent de sapidité amer ou un agent de sapidité umami,
où le rapport de concentrations de l'agent de sapidité supplémentaire dans la première section et la seconde section est de 20:1 à 1,5:1 ou de 1:1,5 à 1:20 sur la base du poids de l'agent de sapidité, et
où le rapport de concentrations de l'agent de sapidité dans la première section et la troisième section est de 1,5:1 à 1:1,5 sur la base du poids de l'agent de sapidité.

13. Produit comprenant un produit alimentaire selon l'une quelconque des revendications 1 à 12,
et des instructions pour la consommation du produit alimentaire,
où les instructions définissent que la première section ayant la plus grande concentration de composés d'arôme devrait être consommée d'abord, suivie immédiatement par la consommation de la section ayant la plus faible concentration de composés d'arôme,
et éventuellement suivie immédiatement par la consommation de la troisième section ayant la plus grande concentration de composés d'arôme.

14. Procédé pour la consommation du produit alimentaire selon l'une quelconque des revendications 1 à 12,
où la première section ayant la plus grande concentration de composés d'arôme est consommée d'abord,
suivie immédiatement par la consommation de la seconde section ayant la plus faible concentration de composés d'arôme,
et éventuellement suivie immédiatement par la consommation de la troisième section ayant la plus grande concentration de composés d'arôme.

15. Procédé pour la préparation d'un produit alimentaire comprenant des composés d'arôme, où le produit alimentaire préparé contient deux sections,
où les deux sections sont visuellement les mêmes,
où les deux sections contiennent les mêmes composés d'arôme dans les mêmes proportions relatives,
à des concentrations différentes dans les deux sections,
comprenant les étapes de :
- préparer un premier mélange d'ingrédients alimentaires comprenant les composés d'arôme pour former une première section ;
- préparer un second mélange d'ingrédients d'alimentaires comprenant les composés d'arôme à une concentration plus basse pour former une seconde section,
- combiner les deux mélanges et préparer le produit alimentaire,
et où le rapport de concentrations des composés d'arôme dans la première section et la seconde section est de 10:1 à 1,5 à 1, sur la base du poids des composés d'arôme,
où les deux sections sont consommables en portions discrètes,
et où le volume de chacune des deux sections est égal ou supérieur à une seule bouchée ou gorgée naturelle.
